# EUROPÄISCHE PATENTSCHRIFT

(11) **EP 1 435 578 B1**
(45) Veröffentlichungstag und Bekanntmachung des Hinweises auf die Patenterteilung: **09.08.2006**
(21) Anmeldenummer: 03027230.6
(22) Anmeldetag: 28.11.2003
(51) Int. Cl.: G06F 13/28

(54) **DMA-Kontroller um die gespeicherten Deskriptoren nach jedem Zugriff weiterzustellen**
DMA controller updating descriptors in memory after each access
Contrôleur DMA pour la mise-à-jour des descripteurs dans la mémoire après chaque accès

(30) Priorität: 03.01.2003 DE 10300030
(43) Veröffentlichungstag der Anmeldung: 07.07.2004
(73) Patentinhaber: Micronas GmbH, 79108 Freiburg i. Br. (DE)
(72) Erfinder: Giebel, Burkhard, 79211 Denzlingen (DE)
(74) Vertreter: Patentanwälte Westphal, Mussgnug & Partner

(56) Entgegenhaltungen:
- US-A- 5 828 903
- US-A- 6 032 204
- US-B1- 6 324 599

## Beschreibung

Die vorliegende Erfindung betrifft ein DMA-Modul und ein Betriebsverfahren dafür. DMA-Module sind z.B. aus US 6,324,599 und US 5,828,903 bekannt. DMA-Module werden in Mikrocomputer- und Mikrocontrollersystemen eingesetzt, um die CPU von regelmäßig wiederkehrenden Datentransportaufgaben zu entlasten. Ein DMA-Modul kann aufgefasst werden als eine Art von spezialisiertem Prozessor, der eine Spezifikation eines Speicherbereichs, auf den zugegriffen werden soll, z. B. eine Start- und Stoppadresse oder eine Startadresse und eine Anzahl von sich daran anschließenden Speicherplätzen, empfängt und die Adressen des spezifizierten Bereichs in schneller Folge nacheinander auf einen Adressbus ausgibt, um ein schnelles Lesen oder Beschreiben des Speicherbereichs zu ermöglichen. Ein DMA-Modul ermöglicht so einen Datentransport zwischen zwei Speicherbereichen oder zwischen einem Speicherbereich und einem Peripheriegerät, ohne dass hierfür Verarbeitungsleistung der CPU in Anspruch genommen werden muss. Ein DMA-Modul entlastet also die CPU von einfachen Datentransportaufgaben und erhöht damit die durchschnittlich erreichbare CPU-Leistung.

Wenn CPU und DMA-Modul sich einen gemeinsamen Bus für den Zugriff auf den Speicher teilen, so muss in jedem Buszyklus, in welchem das DMA-Modul schreibend oder lesend auf den Speicher zugreift, die CPU angehalten werden, um zu verhindern, dass sie gleichzeitig zuzugreifen versucht. Bei diesem als "cycle stealing" bezeichneten Verfahren wird die CPU zwar durch den Betrieb des DMA-Moduls geringfügig ausgebremst, die Zahl der auf diese Weise verloren gehenden CPU-Zyklen ist jedoch deutlich geringer, als wenn die CPU selbst die Datenübertragung steuern müsste. Es wird daher dennoch durch die Verwendung des DMA-Moduls eine Steigerung der CPU-Leistung erreicht.

Ein DMA-Transfer läuft immer von einer Startadresse zu einer Stopadresse. Herkömmlicherweise werden beide Adressen in internen Registern des DMA-Moduls gespeichert. Dadurch ist es möglich, innerhalb eines einzigen Buszyklus eine Adresse auszugeben, eine durch die Adresse bezeichnete Speicherstelle zu lesen oder zu beschreiben und für den darauf folgenden Lese- oder Schreibvorgang einen Adresszähler weiter zu stellen.

Ein DMA-Modul mit zwei solchen Registern kann jeweils nur einen DMA-Prozess gleichzeitig durchführen. Wenn ein laufender DMA-Prozess unterbrochen werden muss, um einen DMA-Prozess mit höherer Priorität durchführen zu können, müssen die Registerinhalte des laufenden, prioritätsniedrigeren Prozesses mit ihren aktuellen Werten aus dem DMA-Modul ausgelagert und zwischengespeichert werden, um die entsprechenden Parameter des höher prioritären Prozesses zu laden und diesen auszuführen. Dieses Aus- und Einladen von Adressen bremst das DMA-Modul und mit ihm den Mikrocontroller und ist daher unerwünscht.

Denkbar wäre, ein solches DMA-Modul mit einer Mehrzahl von Registerpaaren auszustatten, die jeweils die Parameter unterschiedlicher DMA-Prozesse enthalten können, und zwischen denen lediglich umgeschaltet zu werden braucht, um einen laufenden DMA-Prozess zugunsten eines höher priorisierten zu unterbrechen.

Dabei ergibt sich jedoch das Problem, dass derartige Register einen hohen Flächenbedarf auf einem Halbleitersubstrat haben, der beim Fünffachen des Flächenbedarfs eines gleich großen Speicherelements in einem RAM liegt. Dieser hohe Flächenbedarf verteuert die Herstellung mehrprozessfähiger DMA-Module.

Aufgabe der Erfindung ist, ein DMA-Modul zu schaffen, das einen geringen Flächenbedarf aufweist, bzw. ein Verfahren zum Betreiben eines DMA-Moduls zu schaffen, in welchem solche kleinflächigen DMA-Module einsetzbar sind.

Diese Aufgabe wird gelöst durch ein DMA-Modul mit den Merkmalen des Anspruchs 1 bzw. durch ein Verfahren mit den Merkmalen des Anspruchs 2. Vorteilhafte Weiterbildungen sind Gegenstand der Unteransprüche.

Die Erfindung beruht demnach auf einem DMA-Modul, das in herkömmlicher Weise einen Adressgenerator zum Durchführen eines Schreib- oder Lesezugriffs auf einen Speicherplatz eines adressierbaren Speichers und einen Adresszähler zum Weiterstellen einer gespeicherten Adresse auf einen benachbarten Speicherplatz aufweist, dadurch gelöst, dass der Adresszähler nicht auf interne Register des DMA-Moduls wirkt, sondern eingerichtet ist, zwischen dem Lesen eines Adresswertes aus dem Speicher und dem Schreiben des Adresswertes in den Speicher diesen genau einmal weiterzustellen. So übernimmt der Speicherplatz des Speichers an dem der Adresswert gelesen bzw. geschrieben wird, die Funktion eines herkömmlicherweise in das DMA-Modul integrierten Registers. Auf diese Weise reduziert sich der Platzbedarf des DMA-Moduls, und als wichtiger zusätzlicher Vorteil ergibt sich, dass das DMA-Modul zum Steuern einer großen Zahl von DMA-Prozessen eingesetzt werden kann, die sich gegenseitig unterbrechen können, einfach, indem eine Mehrzahl von Speicherplätzen des Speichers als Speicher für Spezifikationen von DMA-Blöcken bereit gestellt werden.

Der Betrieb eines solchen DMA-Moduls umfasst die Schritte
a) Durchführen eines Lesezugriffs auf einen durch eine erste Adresse bezeichneten Speicherplatz eines adressierbaren Speichers, um dort wenigstens eine zweite Adresse zu lesen, die auf den nächsten Speicherplatz hinweist, auf den im laufenden DMA-Prozess zugegriffen werden muss,
b) Weiterstellen der zweiten Adresse auf einen benachbarten Speicherplatz Speichern der zweiten Adresse an dem durch die erste Adresse bezeichneten Speicherplatz und
c) und Durchführen eines Schreib- oder Lesezugriffs an einem durch die zweite Adresse bezeichneten Speicherplatz (wobei es für das Verfahren belanglos ist, ob die zweite Adresse erst weitergestellt und dann auf den von ihr bezeichneten Speicherplatz zugegriffen wird oder umgekehrt),

Da die zur Steuerung des DMA-Prozesses benötigten Parameter stets im adressierbaren Speicher liegen, erübrigt sich die herkömmliche Notwendigkeit, zum Wechseln von einem DMA Prozess zu einem anderen Prozess erst Registerwerte auszulagern und zu ersetzen. Es ist daher eine schnelle Umschaltung zwischen verschiedenen DMA-Prozessen möglich.

Damit das DMA-Modul feststellen kann, wann ein DMA-Prozess abgeschlossen ist, ist es zweckmäßig, dass vor jeder Durchführung des Schritts c) ein Zählwert gelesen wird, der für die Zahl der noch durchzuführenden Speicherzugriffe repräsentativ ist, dass der Zählwert dekrementiert und nach Durchführung des Schritts c) wieder gespeichert wird. So kann das DMA-Modul anhand des Zählwerts feststellen, wann ein DMA-Prozess abgeschlossen ist, und ihn rechtzeitig beenden.

Um die Zahl der Speicherzugriffe zu minimieren, ist es zweckmäßig, dass dieser Zählwert jeweils beim Lesezugriff des Schritts a) mitgelesen und beim Schreibzugriff des Schritts b) mitgeschrieben wird. Dies ist ohne weiteres möglich, wenn die Gesamtbitzahl der zweiten Adresse und des Zählwerts die Breite der in einem einzelnen Lesezugriff gelesenen Datenwörter, d.h. die Breite des Datenbusses, nicht überschreitet. So genügt jeweils ein Buszyklus, um die benötigten Parameter eines DMA-Prozesses zu lesen bzw. zu speichern.

Ein weiterer Aspekt der Erfindung ist, für die Übertragung des DMA-Request-Signales, mit dem ein peripheres Modul einen DMA-Transfer "bestellt", die häufig sowieso vorhandene Interrupt-Request-Leitung des peripheren Moduls zu nutzen. Es wird daher vorteilhafterweise das DMA-Modul in die Request-Leitung zum Interrupt-Controller eingeschleift und damit sozusagen dem Interrupt-Controller vorgeschaltet.

So entsteht eine Struktur, die in der Lage ist, eine Anzahl (in Bezug auf CPU-Leistung) "billiger" DMA-Transfers einzuleiten, bevor ein teurer Interrupt eingeleitet wird. Eine solche Struktur ist besonders geeignet, ohne spürbare CPU-Belastung über lange Intervalle Daten einzusammeln und zum Abschluss konzentriert unter CPU-Beteiligung zu prozessieren.

Erfindungsgemäß ist es möglich, unter DMA-Steuerung zunächst langsam eine Datentabelle zwischen peripherem Modul und RAM zu übertragen, zum Abschluss aber eine CPU-Interrupt-Routine einzuleiten. In der Interrupt-Routine kann die CPU zeitlich konzentriert, z. B. die vorliegende Datentabelle bearbeiten, dann das DMA-Modul für die Übertragung der nächsten Datentabelle konfigurieren und diese DMA-Sequenz starten.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein Blockdiagramm eines typischen Mikrocontrollersystems, in dem die Erfindung anwendbar ist;
- Fig. 2: ein Blockdiagramm eines erfindungsgemäßen DMA-Controllers;
- Fig. 3: die Struktur einer DMA-Vektortabelle;
- Fig. 4: ein Zeitdiagramm diverser in dem DMA-Controller der Fig. 2 auftretender Signale.

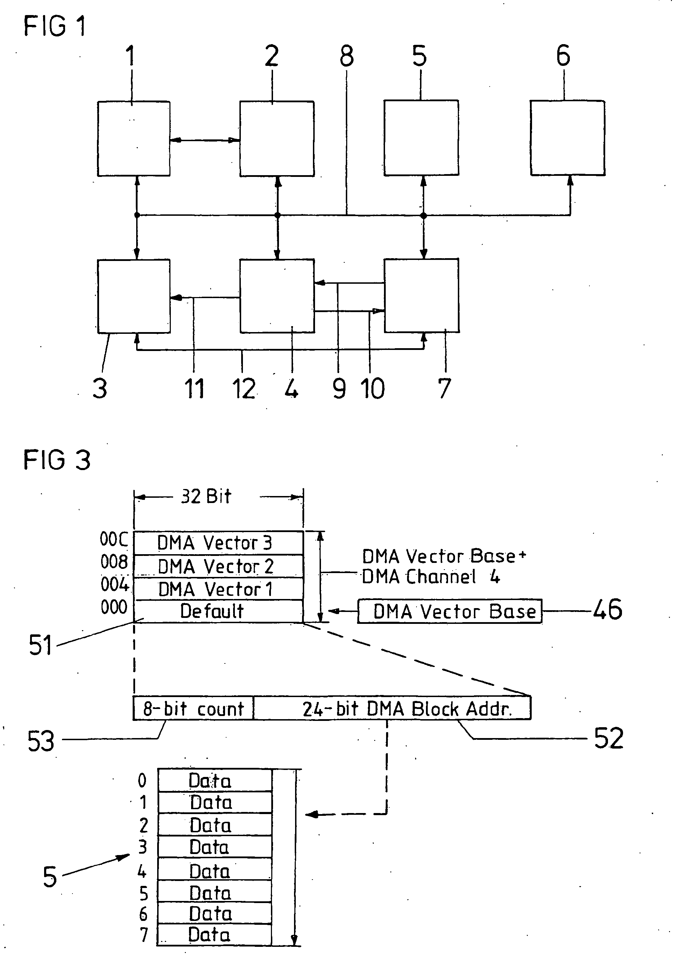

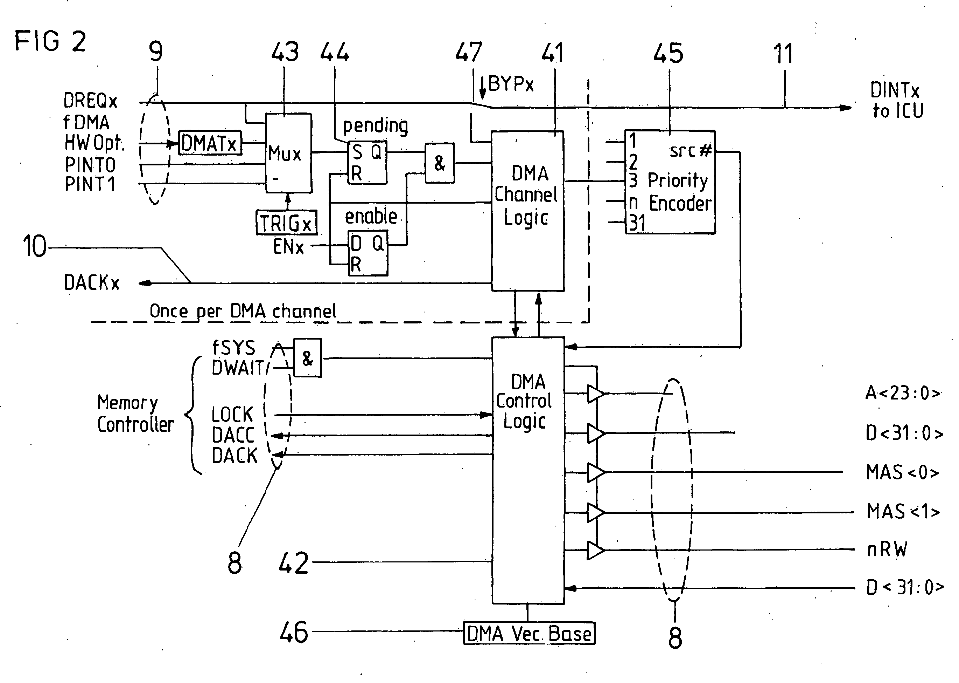

Das in Fig. 1 schematisch gezeigte Mikrocontrollersystem umfasst eine CPU 1, einen Buscontroller 2, eine Interrupt-Verwaltungseinheit (Interruptcontroller ICU) 3, einen DMA-Controller 4, statischen Schreiblesespeicher (SRAM) 5, Nur-Lese-Speicher (ROM) 6, sowie ein Ein-/Ausgabemodul 7. Die Komponenten 1 bis 7 sind untereinander durch einen internen Bus 8 mit Adress-, Daten- und Steuerleitungen verbunden. Das E/A-Modul 7 ist ferner mit einem oder mehreren externen Datenanschlüssen verbunden, von denen es Daten empfängt und in den internen Bus 8 einspeist, oder auf die es Daten vom internen Bus 8 ausgibt. Das E/A-Modul 7, der DMA-Controller 8 und die ICU 3 sind untereinander durch eine Mehrzahl von von dem Bus 8 getrennten Steuerleitungen 9 bis 12 direkt verbunden, auf deren Struktur und Funktion in Verbindung mit Fig. 2 genauer eingegangen wird.

Fig. 2 zeigt detaillierter die Struktur des DMA-Controllers 4. Die Funktionen des DMA-Controllers 4 lassen sich aufteilen in einerseits die Verwaltung verschiedener Prozesse, die einen DMA-Zugriff auslösen können, hier verschiedene Datenquellen oder -senken, die mit dem Mikrocontrollersystem über das Modul 7 verbunden sind, d.h. das Entscheiden, für welchen der mehreren Prozesse zu einem gegebenen Zeitpunkt ein DMA durchgeführt wird. Ein zweiter Abschnitt des DMA-Controllers 4 ist für die Steuerung des konkreten Speicherzugriffs zuständig. Die Verwaltungsschaltungen dieser zwei Bereiche werden hier als DMA-Kanallogik 41 bzw. DMA-Steuerlogik 42 bezeichnet. Die DMA-Kanallogik 41 ist für jeden DMA-Kanal, d.h. für jeden Prozess, für den ein DMA ausgelöst werden kann, einmal vorhanden. Ein Eingangsmultiplexer 43, an den den anfordernden Prozess x i-dentifizierende Signale DREQx, x=1, 2, 3, etc. der Steuerleitung 9 angelegt sind, setzt in einem RS-Flipflop 44 ein Flag, das die Anhängigkeit eines DMA-Prozesses angibt. Dieses Flag wird von der DMA-Kanallogik 41 automatisch zurückgesetzt, wenn der entsprechende DMA-Zyklus beendet ist. Ein Freigabeflag EN maskiert das Anhängigkeits-Flag gegenüber einem Prioritätskodierer 45. Der Prioritätskodierer 45 ist mit Ausgängen aller DMA-Kanallogiken 41 verbunden und liefert an seinem Ausgang eine Ordnungszahl, die derjenigen Kanallogik 41 mit anhängigem DMA-Prozess entspricht, die das höchste Prioritätsniveau aufweist. Die Prioritätsniveaus der einzelnen Prozesse sind am Prioritätskodierer 45 verzeichnet. Die DMA-Kanallogik 41 liefert ferner über die Steuerleitung 10 an den auslösenden Prozess ein Bestätigungssignal DACKx zurück, das die Durchführung eines DMA-Zugriffs anzeigt und dem Prozess mitteilt, das - je nach Zugriffsrichtung - ein aus dem Speicher 5 gelesener Datenwert auf dem internen Bus 8 steht und übernommen werden kann, oder das ein von dem Prozess eingespeister Datenwert übernommen worden ist, und ein neuer bereit gestellt werden muss.

Ein Schalter 47 ist in der Anforderungssignalleitung DREQx, x= 1, 2, 3 angeordnet, der es ermöglicht, wahlweise ein auf der Leitung DREQx eintreffendes Signal unmittelbar zur ICU 3 durch zu schleifen und so einen Interrupt auslösen zu können, oder ein von der DMA-Kanallogik 41 erzeugtes Steuersignal der ICU 3 zuzuführen. Die Leitung 12 dient der direkten Übertragung von Daten zwischen ICU 3 und Schnittstelle 7 in einer Situation, in der das Anforderungssignal DREQx am Schalter 47 auf die Leitung 11 durchgeschleift ist.

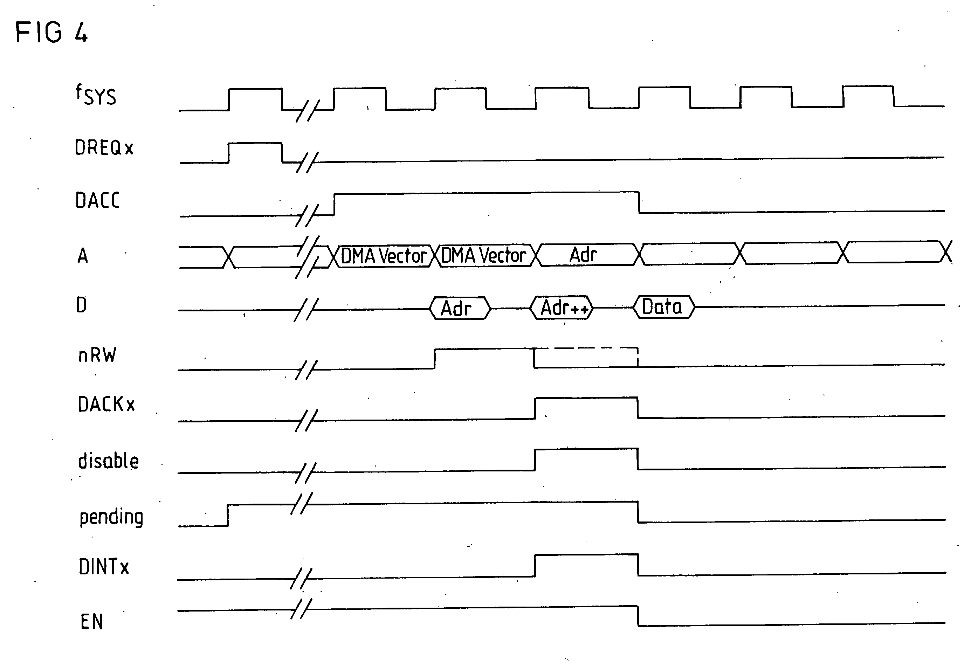

Die DMA-Steuerlogik 42 steuert innerhalb eines DMA-Zyklus den Ablauf jedes einzelnen Zugriffs. Um die verschiedenen DMA-Prozesse, die zeitlich überlappend ablaufen können, zu verwalten, greift die DMA-Steuerlogik 42 auf eine DMA-Vektortabelle 51 zu, die im SRAM 5 angesiedelt ist. Eine Startadresse dieser Vektortabelle 51 ist einem Tabellenanfangsregister 46 der DMA-Steuerlogik 42 verzeichnet. Die Einträge der DMA-Vektortabelle sind 32-Bit-Wörter, die eine Spezifikation eines DMA-Prozesses bilden und sich, wie in Fig. 3 gezeigt, jeweils zusammensetzen aus einer 24 Bit breiten Adresse 52, die eine Anfangsadresse eines Blocks im SRAM 5 ist, in dem ein DMA-Zugriff stattfinden soll, und einen 8 Bit breiten Zählwert, der die Länge des Blocks in Byte angibt.

Die Adresse und der Zählwert werden jeweils vor Beginn eines DMA-Prozesses, z. B. durch die CPU 1, in die DMA-Vektortabelle 51 geschrieben. Bei der hier beispielhaft angenommenen Breite des Zählwerts von 8 bit kann ein DMA-Block maximal eine Länge von 2⁸ =256 Byte haben. Selbstverständlich sind auch beliebige andere Aufteilungen der DMA-Vektoren auf Anfangsadresse und Zählwert und damit andere Blocklängen denkbar.

Wenn die DMA-Steuerlogik 42 von Prioritätskodierer 45 die Nummer eines DMA-Prozesses empfängt, für den ein Zugriff durchgeführt werden soll, so berechnet die Steuerlogik 42 eine Zugriffsadresse durch Addieren des Vierfachen der vom Prioritätskodierer 45 gelieferten Nummer zu der Adresse des Tabellenanfangsregisters 46. Wenn die vom Prioritätskodierer 45 gelieferte Nummer die Werte 1, 2 oder 3 annehmen kann, kann die Steuerlogik 42 so auf die in Fig. 3 mit "DMA-Vektor 1", "DMA-Vektor 2" bzw. "DMA-Vektor 3" etc. bezeichneten Felder der Vektortabelle 51 zugreifen.

Wie man leicht sieht, ist der DMA-Controller 4 leicht anpassbar, um ohne nennenswerte Änderungen an seiner Schaltungsstruktur DMA-Prozesse in unterschiedlicher Anzahl zu verwalten. Begrenzender Faktor für die Zahl der Prozesse ist lediglich die Ausgangsbreite des Prioritätsencoders 45, d.h. die Bitzahl der Leitung, über die dieser die Nummer eines DMAauslösenden Prozesses an die Steuerlogik 42 übermittelt, und die Größe der DMA-Vektortabelle 51.

Fig. 4 zeigt den Verlauf verschiedener Signale innerhalb des Mikrocontrollersystems im Laufe eines DMA-Prozesses. Dabei bezeichnet f_{sys} den Systemtakt, mit dem sowohl die CPU als als auch der DMA-Controller 4 arbeiten. Eine Periode von f_{SYS} entspricht einem CPU-Takt. Ein Impuls des Signals DREQx (x=1, 2, 3 etc.) zeigt eine DMA-Anforderung durch den Prozess x an. Es kann mehrere Taktzyklen dauern, bis der Anforderung entsprochen wird. Wenn es soweit ist, wechselt das vom DMA-Controller 4 an die Speichersteuerung gelieferte Signal DACC von niedrigem auf hohen Pegel, um anzuzeigen, dass der DMA-Controller 4 Herrschaft über den Bus hat und die CPU 1 nicht schreibend oder lesend zugreifen darf. In einem ersten der Taktzyklen mit DACC auf hohem Pegel gibt der DMA-Controller 4 den anhand der Identität des anfordernden Prozesses und der im Tabellenanfangsregister 46 verzeichneten Adresse berechnete Adresse eines der Vektoren "DMA-Vektor 1", "DMA-Vektor 2" oder "DMA-Vektor 3" auf die Adressleitungen A des Busses 8. Das SRAM 5, in dem sich die Tabelle S1 der Vektoren befindet, stellt daraufhin die an der entsprechenden Adresse verzeichnete Spezifikation eines DMA-Blocks, bestehend aus Anfangsadresse und zu übertragender Bytezahl, auf die Datenleitungen des Busses 8. Diese Werte werden vom DMA-Controller 4 in ein Adressregister bzw. einen Zähler übernommen.

In einem nachfolgenden Taktzyklus wird die Adresse des DMA-Vektors erneut auf die Adressenleitungen des Busses 8 gestellt. Gleichzeitig werden die um eins inkrementierte Anfangsadresse und der um eins dekrementierte Zählwert auf die Datenleitungen des Busses 8 gegeben, um den bisherigen DMA-Vektor mit diesen Werten zu überschreiben.

Im nächsten Taktzyklus wird die inkrementierte Adresse auf den Adressleitungen ausgegeben, um - je nach Zugriffsrichtung des DMA-Prozesses - einen Schreib- oder Lesezugriff an der entsprechenden Speicherstelle durchzuführen.

Wenn mehrere Schreib- oder Lesezugriffe eines einzigen DMA-Prozesses unmittelbar, d.h. ohne eine Unterbrechung durch einen DMA-Prozess höherer Priorität aufeinanderfolgen, kann für den zweiten und jeden weiteren Speicherzugriff der Schritt des Lesens des DMA-Vektors entfallen, da die dort gespeicherte Spezifikation in den Registern des DMA-Moduls bereits gespeichert ist. Die durch die DMA-Vektoren bezeichneten Speicherplätze haben somit die Funktion von Registern, die auf eine Adresse unmittelbar vor derjenigen Speicheradresse in SRAM 5 weisen, an der der nächste Schreib-/ Lesezugriff stattfinden soll. D.h. an der beim Initialisieren eines DMA-Prozesses in einen DMA-Vektor geschriebene Adresse selbst findet kein Zugriff statt, sondern erst an den darauf folgenden.

Wenn der Zählwert 0 erreicht ist, ist ein DMA-Prozess beendet.

Alternativ könnte natürlich vorgesehen werden, dass bei der Initialisierung eines DMA-Prozesses an der Speicherstelle, auf die der zugeordnete DMA-Vektor weist, die Größe des zu bearbeitenden Speicherblocks und die erste Adresse verzeichnet ist, an der ein Schreib- oder Lesevorgang durchgeführt werden soll. Dann würde sich die oben mit Bezug auf Fig. 4 beschriebene Schrittfolge geringfügig verändern. Auf das Lesen der vom DMA-Vektor bezeichneten Speicherstelle könnte unmittelbar der Schreib-/Lesezugriff auf die dort angegebene Adresse folgen, und eine inkrementierte Adresse und ein dekrementierter Zählwert würden in einem darauf folgenden Taktzyklus an der vom DMA-Vektor bezeichneten Stelle gespeichert.

Im einem wie im anderem Falle benötigt ein DMA-Prozess zum Lesen oder Schreiben eines ersten Speicherplatzes drei Taktzyklen und für jeden folgenden Speicherplatz wenigstens zwei Taktzyklen, in denen die CPU 1 gestoppt ist. Dies ist zwar langsamer als bei einem DMA, bei dem die Adressen des zu bearbeitenden Speicherblocks unmittelbar in Registern eines DMA-Controllers gespeichert sind und nicht aus einem ausgelagerten Speicher beschafft werden müssen, es ist aber immer noch deutlich schneller, als wenn die CPU 1 selbst diese Aufgaben ausführen müsste. Da die Zahl der im DMA-Controller benötigten Register unabhängig von der Zahl der DMA-Prozesse ist, die der DMA-Controller 4 gleichzeitig verarbeiten kann, macht es die Erfindung sehr einfach, DMA-Controller zu konstruieren, die eine beliebig große Zahl von DMA-Prozessen gleichzeitig handhaben können.

## Patentansprüche

1. DMA-Modul mit
a) einem Adressgenerator (42) für eine erste Adresse im DMA-Modul zum Durchführen eines Schreib- und/oder Lesezugriffs auf einen Speicherplatz eines adressierbaren Speichers (5), der zweite Adresswerte beinhaltet, und
b) einem Adresszähler zum Weiterstellen einer gespeicherten Adresse auf einen benachbarten Speicherplatz;
**dadurch gekennzeichnet, dass**
der Adresszähler eingerichtet ist, zwischen dem Lesen eines zweiten Adresswertes aus dem Speicher (5) und dem Rückschreiben des zweiten Adresswertes in den Speicher diesen genau einmal weiterzustellenwobei vor jedem Weiterstellen ein für die Zahl der in einem DMA-Prozess noch durchzuführenden Speicherzugriffe repräsentativer Zählwert (53) vom DMA-Modul aus dem Speicher (5) gelesen und dieser Zählwert (53) de- oder inkrementiert und nach dem Weiterstellen wieder gespeichert wird und das Weiterstellen des Adresszählers beendet wird, wenn der Zählwert einen vorgegebenen Endwert erreicht hat, und
dass der Speicher (5) über einen Bus eines Mikrocontrollersystems mit dem DMA-Modul verbindbar ist .

2. Verfahren zum Betreiben eines DMA-Moduls, mit den Schritten:
a) Durchführen eines Lesezugriffs durch das DMA-Modul auf einen durch eine erste Adresse bezeichneten Speicherplatz eines adressierbaren Speichers (5), um dort wenigstens eine zweite Adresse (52) zu lesen, wobei der Speicher (5) über einen Bus mit dem DMA-Modul verbunden ist;
b) in beliebiger Reihenfolge: genau einmal Weiterstellen der zweiten Adresse (52) auf einen benachbarten Speicherplatz und Speichern der zweiten Adresse (52) am durch die erste Adresse bezeichneten Speicherplatz; und
c) Durchführen eines DMA-Schreibzugriffs oder DMA-Lesezugriffs an einem durch die zweite Adresse (52) bezeichneten Speicherplatz,
wobei vor jeder Durchführung des Schritts b) vom DMA-Modul ein für die Zahl der in einem DMA-Prozess nach durchzuführenden Speicherzugriffe repräsentativer Zählwert (53) aus dem Speicher (5) gelesen und der Zählwert (53) de- oder inkrementiert wird und nach Durchführung des Schritts b) wieder gespeichert wird, und das Verfahren abbricht, wenn der Zählwert einen vorgegebenen Endwert erreicht.

3. Verfahren nach Anspruch 2, **dadurch gekennzeichnet, dass** der Zählwert (53) beim Lesezugriff des Schritts a) mit gelesen und beim Schreibzugriff des Schritts b) mit geschrieben wird.

4. Verfahren nach einem der Ansprüche 2 bis 3, **dadurch gekennzeichnet, dass** jeder Schreib- bzw. Lesezugriff innerhalb eines Zyklus eines Busses (8) stattfindet, über den das DMA-Modul (4) mit dem Speicher (5) verbunden ist.

5. Verfahren nach einem der Ansprüche 2 bis 4, **dadurch gekennzeichnet, dass** das DMA-Modul (4) in einem Buszyklus, in dem es auf den Speicher (5) zugreift, einen ebenfalls mit dem Speicher (5) verbundenen Mikrocontroller (1) anhält.

6. Verfahren nach einem der Ansprüche 2 bis 5, mit dem Schritt des Anforderns eines DMA-Zugriffs durch ein Peripheriemodul und des Auswählens der ersten Adresse anhand der Identität des Peripheriemoduls.

## Claims

1. A DMA module, comprising:
a) an address generator (42) for a first address in the DMA module for performing a write access and/or read access to a memory location of an addressable memory (5) containing second address values, and
b) an address counter for advancing a stored address to an adjacent memory location;
**characterised in that** the address counter is configured so that, between reading a second address value from the memory (5) and writing the second address value back into the memory, the counter advances this value exactly once, whereby, before each advancing operation, a counted measurand (53) representative of the number of memory access operations yet to be performed in a DMA process by the DMA module is read out of the memory (5) and this counted measurand (53) is decremented or incremented and after being advanced is stored again and the advancing of the address counter is terminated when the counted measurand has reached a predetermined final value,
and **in that** the memory (5) can be connected to the DMA module via a bus of a microcontroller system.

2. A method for operating a DMA module, comprising the following steps:
a) performing a read access through the DMA module to a memory location of an addressable memory (5) identified by a first address in order to read at least one second address (52) there, the memory (5) being connected to the DMA module via a bus,
b) in any sequence: precisely once advancing the second address (52) to an adjacent memory location and storing the second address (52) at the memory location identified by the first address (52); and
c) performing a DMA write access or DMA read access at a memory location identified by the second address (52), whereby before each performance of step b) by the DMA module, a counted measurand (53) that is representative of the number of memory access operations yet to be performed in a DMA process is read out of the memory (5) and the counted measurand (53) is decremented or incremented and is stored again after step b) has been performed, and the process is aborted when the counted measurand reaches a predetermined final value.

3. A method according to Claim 2,
**characterised in that** the counted measurand (53) is also read during the read access of step a) and is also written during the write access of step b).

4. A method according to one of Claims 2 to 3,
**characterised in that** each write access or read access takes place within one cycle of a bus (8) via which the DMA module (4) is connected to the memory (5).

5. A method according to one of Claims 2 to 4,
**characterised in that** the DMA module (4) halts a microcontroller (1) also connected to the memory (5) within a bus cycle in which said DMA module accesses the memory (5) .

6. A method according to one of Claims 2 to 5, including the step of requesting a DMA access through a peripheral module and of selecting the first address based on the identify of the peripheral module.

## Revendications

1. Module d'accès direct à la mémoire (DMA) comprenant :
a) un générateur d'adresses (42) pour une première adresse dans le module DMA destiné à réaliser un accès d'écriture et/ou de lecture sur un emplacement de mémoire d'une mémoire (5) adressable qui contient des deuxièmes valeurs d'adresses, et
b) un compteur d'adresses destiné à repositionner une adresse mémorisée sur un emplacement de mémoire adjacent,
**caractérisé en ce que**
le compteur d'adresses est construit pour repositionner juste une fois une deuxième valeur d'adresse, entre la lecture de cette deuxième valeur d'adresse à partir de la mémoire (5) et la réponse de la deuxième valeur d'adresse dans la mémoire, le module DMA lisant à partir de la mémoire (5) avant chaque repositionnement, une valeur de comptage (53) représentative du nombre d'accès mémoire encore à réaliser dans un processus DMA, et cette valeur de comptage (53) est décrémentée ou incrémentée, puis est remémorisée après le repositionnement, ce repositionnement du compteur d'adresses étant achevé lorsque la valeur de comptage a atteint une valeur finale prédéterminée, et
la mémoire (5) peut être reliée au module DMA par un bus d'un système de microcontrôleur.

2. Procédé de fonctionnement d'un module DMA, comprenant les étapes consistant à :
a) réaliser un accès de lecture, au moyen du module DMA, à un emplacement de mémoire d'une mémoire adressable (5) qui est désigné par une première adresse, afin d'y lire au moins une deuxième adresse (52), la mémoire (5) étant reliée au module DMA par un bus ;
b) dans la séquence appropriée : repositionner juste une fois la deuxième adresse (52) sur un emplacement de mémoire adjacent et mémoriser la deuxième adresse (52) au niveau de l'emplacement de mémoire désigné par la première adresse ; et
c) réaliser un accès d'écriture DMA ou un accès de lecture DMA à un emplacement de mémoire désigné par la deuxième adresse (52) ; et
avant chaque réalisation de l'étape b), une valeur de comptage (53) provenant et représentative du nombre d'accès mémoire encore à réaliser dans un processus DMA est lue à partir de la mémoire (5) par le module DMA, et la valeur de comptage (53) est décrémentée ou incrémentée et est remémorisée après avoir réalisé l'étape b), le procédé s'arrêtant lorsque la valeur de comptage atteint une valeur finale prédéterminée.

3. Procédé selon la revendication 2,
**caractérisé en ce que**
la valeur de comptage (53) est lue lors de l'accès de lecture de l'étape a) et écrite lors de l'accès d'écriture de l'étape b).

4. Procédé selon l'une des revendications 2 à 3,
**caractérisé en ce que**
chaque accès d'écriture ou de lecture est réalisé pendant un cycle d'un bus (8), lequel relie le module DMA (4) à la mémoire (5).

5. Procédé selon l'une des revendications 2 à 4,
**caractérisé en ce que**
le module DMA (4) dans un cycle de bus, dans lequel il accès à la mémoire (5), arrête un microcontrôleur également relié à la mémoire (5).

6. Procédé selon l'une des revendications 2 à 5, comprenant l'étape consistant à demander un accès DMA par un module périphérique et à sélectionner la première adresse à l'aide de l'identité du module périphérique.
